# EUROPEAN PATENT APPLICATION

(11) **EP 1 365 608 A1**
(43) Date of publication of application: **26.11.2003**
(21) Application number: 03291016.8
(22) Date of filing: 25.04.2003
(51) Int. Cl.: H04Q 7/32, G06F 1/00

(54) **Management of different configurations and different levels of functionalities in equipment for telecommunications networks**

(30) Priority: 14.05.2002 IT MI20021017
(71) Applicant: ALCATEL, 75008 Paris (FR)
(72) Inventor: Fumagalli, Aurelio, 23876 Monticello Brianza (Lecco) (IT); Perego, Maria Adele, 20045 Besana Brianza (Milano) (IT); Sedini, Augusto, 20060 Trezzano Rosa (Milano) (IT)
(74) Representative: Lamoureux, Bernard

(57) **Abstract**

A method for managing different configurations and different levels of functionalities in equipment for telecommunications networks is described. The method calls for the following phases: definition of one or more licences, each licence being associated with corresponding configurations and/or levels of functions; provision of a semi-permanent equipment memory; provision of a software program to be loaded in the equipment to enable its normal operation; and preset of the semi-permanent equipment memory by storing indicative information referred to a licence so that the equipment software program will learn the licence on the basis of the information that is stored and make only those functions that are associated with the licence available

## Description

This invention concerns a method for managing different configurations and function levels in an item of equipment for telecommunications networks. This invention also concerns a telecommunications equipment, typically a network element, suitable for implementing said method.

Usually, current telecommunications equipment is equipped with supervision systems and provides the possibility of supporting various different configurations. The different configurations may be of different levels of interest for the users.

In practice, each configuration of the equipment corresponds to a different level of performance, each level is managed by supervision systems, having different applications.

A certain number of software licences, differing from one another in terms of the functions they support, are currently defined and available. Licences enabling the various different configurations are, however, not envisaged.

A price policy is based almost exclusively on the cost of the hardware, partly because although the user of the equipment is given a licence that only supports a few functions, there is no possibility of checking whether the user is using it correctly. Moreover, it is in point of fact impossible to prevent the use of given functions in an equipment when such functions are not truly disabled.

It is possible to manage different licence levels with different software packages, each of which can support different configurations and functions: in this way, an equipment user may only use the configuration and the functions supported by the software that is installed.

It must be noted, however, that the creation of a new software package is associated with a set of specific activities that have a cost for the company: software development, integration, industrialisation, production, supply and after-sale assistance.

In view of the state of the art illustrated above, the purpose of this invention is to provide a telecommunications equipment in which a single equipment software is provided. This software enables different levels of functions and configurations associated with different licences to be managed in a secure and flexible manner.

This purpose, in addition to others, is achieved by means of a management method according to claim 1 and an equipment having the features indicated in claim 6. Further advantageous features of this invention are indicated in the dependent claims. All the claims are understood to be integral parts of this description.

The idea underlying this invention consists of storing information concerning the licence required by the owner/user of the equipment inside the equipment itself, in such a way that the appropriate checks for enabling only those functions that are associated with that specific licence will be enabled at the software level.

The information is stored in a protected area set aside in a semi-permanent memory, that is usually already provided in the equipment and is intended for containing the software and the configuration data thereof (for example, a soldered FLASH memory or a FLASH CARD).

A detailed description of the invention is provided below. Said description is provided by way of a non limiting example to be read read with reference to the attached drawings in which:
- Fig. 1 is a flow chart illustrating schematically the sequence of phases for implementing the method; and
- Fig. 2 is a flow chart illustrating schematically the sequence of phases for up-dating the licence for the equipment.

By way of example only and without limitations, this invention will be described with reference to a transceiver for radio links, that is to say for transmitting and receiving wireless signals between a first and a second station. Typically, equipment of this kind includes one transmitter section and one receiver section, at least one receiving/transmitting antenna and interfaces that receive the wireless signal and that provide an output signal to be transmitted through the air and received by means of the receiving antenna. Typical radio equipment transmits signals on a given number n of channels and at least one other spare channel is usually provided.

It can easily happen that an underequipped system (consisting typically of two items of equipment of the type described above) is required, for example with a lower number of transmission channels than the maximum envisaged for the equipment. The reason for this may be that the traffic is expected to be less than that which would be obtained by exploiting the full potential of the equipment. In this case the manufacturer of the equipment is faced with two options: to manufacture equipment customised to meet the purchaser's requirements or to supply the user with complete equipment at a lower price. The first solution is disadvantageous because it would lead to a situation in which too many versions of the equipment, each different from the others, would have to be produced. The second solution is also disadvantageous from the financial point of view, since it would actually not be possible to implement a proper policy of differentiation of the prices of the equipment.

As already stated above, according to this invention, information concerning the licence required by the owner/user will be stored inside the equipment so that the appropriate checks can be carried out, preferably at software level, in order to enable only those functions that are associated with that specific licence.

Conveniently, storage of the information concerning the licence required by the owner/user of the equipment is carried out in a protected area set aside in a semi-permanent memory. A semi-permanent memory is usually already provided in the equipment, for the purpose of containing the software and the configuration data of the equipment. What is provided according to this invention is management of the memory itself and in particular of the protected area. Conveniently, for example, the storage area can be a soldered FLASH memory or a FLASH CARD.

Unlike the arrangements made in the past in known equipment, therefore, the licence is therefore linked to the single item of equipment and not to the software package that is loaded. The software package can always be the same, regardless of the fact that it is being used in equipment configured in such a way as to support limited functions only (lower than the maximum performance of the equipment itself). This enables the number of software packages to be reduced, with considerable savings in terms of development and management thereof on the part of the company manufacturing the equipment.

According to this invention, when an item of equipment is purchased, a specific licence is purchased that defines the configurations and the level of the functions that can be used with the equipment in question. It will also be possible, subsequently, to carry out an up-date of the licence without changing the software package that was installed.

In the first place, a certain number of licences are defined, that can, for example, be identified by codes. Each licence corresponds to a different configuration with different levels of functionalities. A special code can in any case be defined for association with a super-licence covering all the configurations and all the functionalities. Obviously, the number and the type of the licences will depend on various technical factors but, not least important, also on the commercial strategy that the equipment manufacturer intends to apply.

Management of the licences is implemented by preset of the semi-permanent memory of the equipment. With the preset, the data enabling the licence that was actually purchased by the owner/user together with that specific item of equipment to be identified are recorded.

The manner in which the software is loaded remains unchanged. During the phase of configuration of the equipment and also during normal operation, the software will self-learn the type of licence and place only the functions that are associated with it at disposal.

If the owner/user needs to extend the functions, he will have to purchase a new licence for each item of equipment capable of supporting the new level of functionalities.

Transition to a new licence can be carried out in two different ways: in the hardware mode or in the software mode.

The Hardware mode is implemented by replacing the memory of the equipment. The owner/user of the equipment will be provided with a new memory which has been preset at the factory with the new licence.

This replacement may concern either the single memory module (in the case of a removable FLASH CARD), or the whole board containing the semi-permanent memory.

Again in this case, the manner in which the software is loaded remains unchanged. The new type of licence will be self-learnt when the equipment software is restarted, and will place only the functions covered by the new licence at disposal.

In order to make matters easier for the owner/user, it is possible to envisage factory operations for loading the software package and the configuration data (which the owner/user will obviously have to provide).

In the Software mode, the owner/user will be provided with a set of information, to be entered by means of a specific procedure and through the supervision system, thus enabling on-line up-dating of the licence. This information will be obtained from the information that was preset in the memory of the equipment (for example, the identification code of the memory and the code of the licence currently being used) and notified by the owner of the equipment together with the application for an up-date of the licence.

For this mode, it is necessary to define a suitable security level for processing of the data to be stored in the equipment and to be provided to the owner/user for up-dating purposes (data encryption and key management).

An example of an embodiment of this software up-dating mode is described below:
1. The following information is stored in the semi-permanent memory of the equipment at the time of the initial supply:
   - Code of the licence;
   - Identification code of the equipment memory;
2. The owner/user of the equipment submits his application for an up-date of the licence, notifying his data, typically, the identification code of the memory and the code of the licence. Conveniently, the owner/user of the equipment can acquire this information through the supervision system, which asks the equipment software for them directly by means of a dedicated function.
   For managing cases of complete loss of all the information contained in the semi-permanent memory, it is advisable to request the owner/user to provide additional information concerning the specific parameters of each item of equipment (for instance, the so-called MAC-ADRESSES, SYSTEM IDENTIFIERS, etc.). This same information may also be requested in the event that this type of management is to be introduced for equipment that is already installed.
3. On receiving the application for an up-date of the licence, the equipment manufacturer will define the code of the new licence and will develop an authentication key, on the basis of the information received about the equipment (identification code of the memory of the equipment). The following information is then notified to the owner/user so that he can carry out the up-date:
   - Code of the new licence applied for by the owner/user;
   - Authentication key for carrying out the up-date.
4. The owner/user may therefore proceed to up-date the equipment on-line, after receiving the information concerning the new licence. The operation will be activated by performing a special procedure on the supervision system. This system sends the code of the new licence and the associated authentication key to the software residing in the equipment. Of course, the algorithm for generating the keys must be replicated in the equipment software, in order to enable validation of the key entered in the framework of the modification procedure.

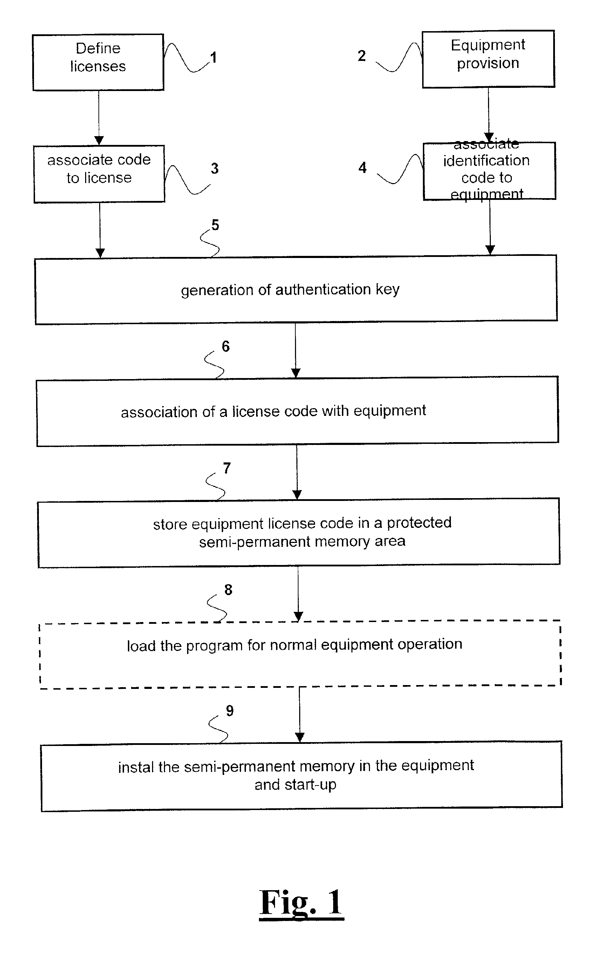

With specific reference to the flow chart of Figure 1, the sequence of phases for implementing the method according to the invention is listed below:
1: definition of two or more licences [equipment manufacturer];
2: provision of two or more items of equipment [equipment manufacturer];
3: Association of a code with each licence [equipment manufacturer];
4: Association of a specific identification code with each item of equipment [equipment manufacturer];
5: Generation of an authentication key for carrying out an up-date of the functions, if required, and of the equipment configurations [equipment manufacturer];
6: Identification of a licence to be granted to a specific item of equipment, that is to say association of a licence code with an equipment code [equipment manufacturer at the request of the equipment owner];
7: storage of the licence code for the equipment in a protected area of the semi-permanent memory [equipment manufacturer];
8: if required, loading of the software program for normal operation of the equipment [equipment manufacturer]; and
9: installation of the semi-permanent memory in the equipment and start-up of the equipment by running the equipment software program in the usual manner [equipment manufacturer or owner].

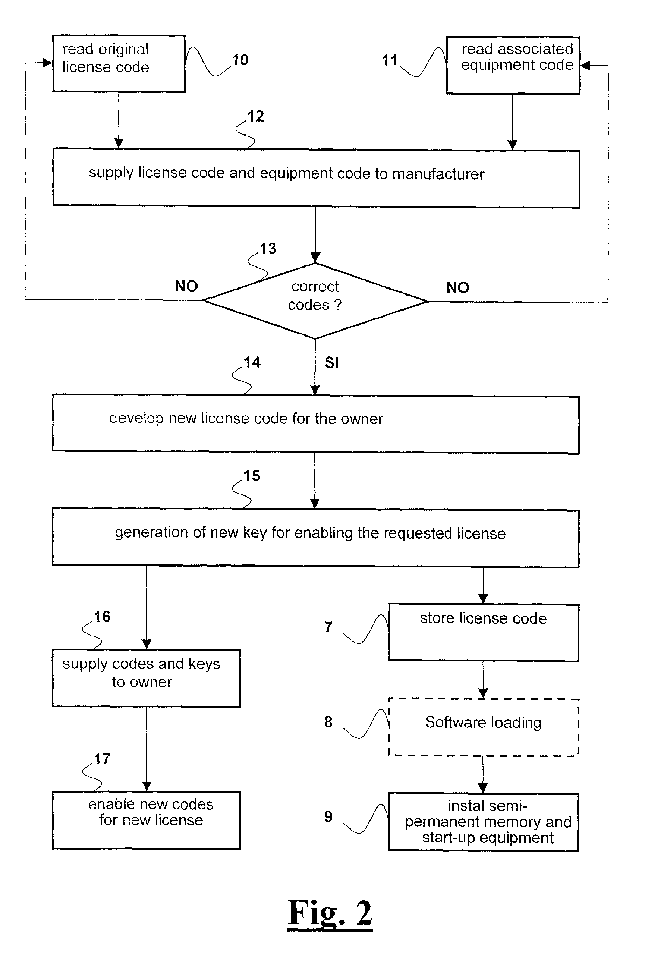

With specific reference to the flow chart of Fig. 2, the sequences of the phases for up-dating a licence on an item of equipment is listed below:
10: reading of the code of the licence supplied originally with a specific item of equipment [equipment manufacturer or owner];
11: reading of the equipment code associated with the equipment for which a licence up-date is required [equipment manufacturer or owner];
12: notification of the licence code and of the equipment code to the manufacturer;
13: check that the codes are correct [equipment manufacturer]. If the codes are not consistent, they are requested to be read again (10, 11) and to be supplied to the manufacturer (12);
14: if the codes are found to be consistent in phase 13, development of a new licence code on the basis of the new licence (that is to say on the basis of the configurations and of the functionalities it covers) requested by the owner [equipment manufacturer]. The equipment code remains unchanged;
15: generation of a new key for enabling the requested licence [equipment manufacturer];
16: supply of the codes (licence codes and, if required, also the equipment code, which in any case is unchanged) and of the key to the owner of the equipment [equipment manufacturer];
17: enabling, via the craft-terminal, of the new codes for the new licence by entering/loading the new up-dated codes and, if necessary, also the software program for normal operation of the equipment [equipment manufacturer or owner].

In the event that the up-dating of the licence is carried out by the manufacturer at the factory or in any case in a place other than that where the equipment is installed, phases 7 (8, if required) and 9 have to be carried out.

The solution proposed embodies the following main advantages:

First, it provides high levels of granularity and of flexibility in management of the licences. This is because a specific licence is associated with each single item of equipment, and the equipment can therefore support a specific level of functionalities. This enables a price policy based on the functions required by customers and above all by the market.

Second, it is not necessary to make any hardware changes to the equipment, and therefore this invention can easily be applied even to all the equipment already produced and installed.

There is also the advantageous possibility of up-dating the functions that had been purchased earlier by the owner/user without having to intervene on the HW/SW configuration of the equipment. This operation can be carried out on line, without having to place the equipment out of service and without the user losing any traffic.

In addition to the advantages referred to above, it will be easy to appreciate the commercial advantages and in terms of development and production originating from the fact that there will be a single software package that supplies and supports more than one licence and more than one function.

To conclude, the solution according to this invention provides an agile and innovative method for managing a specific licence in each single item of equipment. The solution does not entail any increase in the hardware development costs, and enables more flexible equipment to be placed at disposal, with a potential competitive edge on the market.

A method and an equipment have been described and shown that are capable of managing different configurations and different levels of functions in an telecommunications equipment and that achieve all the purposes referred to above. Starting out from the description and the attached drawings, the skilled in the art will be able to think of many modifications, adaptations and variants. All such modifications, adaptations and variants are, however, to be considered as falling within the scope of this patent application.

## Claims

1. Method for managing different configurations and/or different levels of functions in a telecommunications equipment, **characterised by** the fact that it includes the following steps:
definition of two or more licences, each of the licences being associated with corresponding configurations and/or levels of functions;
provision of a semi-permanent equipment memory;
provision of a software program to be loaded in the equipment in order to enable its normal operation; and
preset of the semi-permanent equipment memory by storing information indicative of a licence in such a way that the equipment software program will self-learn the licence on the basis of the information that has been stored and place at disposal only those functions that are associated with the licence.

2. Method according to claim 1, **characterized in that** said telecommunications equipment is a network element, and in particular a transceiver for radio transmission.

3. Method according to claim 1, **characterized in that** it comprises a further step of associating each licence with a code.

4. Method according to claim 1, **characterized in that** the step of provision of a semi-permanent equipment memory includes the phase of provision of a memory of the FLASH type or a FLASH CARD, which may be removable.

5. Method according to any of the foregoing claims 1 to 4, **characterized in that** it comprises the step of up-dating the equipment licence, by carrying out the following steps: reading of the code of the licence originally supplied together with a given item of equipment; reading of the equipment code associated with the item of equipment of which the licence is required to be up-dated; notification of the licence code and of the equipment code to the manufacturer; development of a new licence code on the basis of the new licence applied for by the owner; generation of a new key for enabling the licence applied for; provision of the licence code and, if required, also of the equipment code and of the key to the equipment owner; enabling of the new codes for the new licence by entering/loading the new up-dated codes and, if necessary, also the software program for normal operation of the equipment.

6. Telecommunications equipment, **characterized in that** it comprises means for the implementation of the method of any of claims 1 to 5.

7. Telecommunications equipment as in claim 6, said equipment including a semi-permanent memory, **characterized in that** said semi-permanent memory also includes a protected area, said protected area being used to store information concerning a licence granted for using said equipment.

8. Equipment according to claim 7, **characterized in that** said network element is a transceiver for radio transmission.
